# EUROPEAN PATENT APPLICATION

(11) **EP 4 800 354 A1**
(43) Date of publication of application: **02.09.2026**
(21) Application number: 25221319.4
(22) Date of filing: 08.12.2025
(51) Int. Cl.: G01C 21/00, G06T 17/05, G06T 17/20, G06T 19/20

(54) **METHOD FOR AUTOMATICALLY GENERATING 3D ROADS IN VIRTUAL ENVIRONMENT BASED ON PRECISE ROAD MAP DATA**

(30) Priority: 11.12.2024 KR 20240183850
(71) Applicant: Korea Electronics Technology Institute, Bundang-gu, Seongnam-si Gyeonggi-do 13509 (KR)
(72) Inventor: SHIM, Young Bo, 13604 Seongnam-si, Gyeonggi- do (KR); MIN, Kyoung Won, 13581 Seongnam-si, Gyeonggi-do (KR); SON, Haeng Seon, 13588 Seongnam-si, Gyeonggi-do (KR); LEE, Seon Young, 04717 Seoul (KR); SUNG, Gi Ho, 13604 Seongnam-si, Gyeonggi- do (KR); YOO, Jae Woong, 13555 Seongnam-si, Gyeonggi-do (KR); PARK, Jin Man, 18479 Hwaseong-si, Gyeonggi-do (KR); CHO, Yong Hyeon, 05410 Seoul (KR)
(74) Representative: Isarpatent

(57) **Abstract**

Provided is a system for automatically generating 3D roads in a virtual environment based on precise road map data, the system including: a map data pre-processing unit configured to perform a pre-processing operation with respect to data of each layer constituting a precise road map; a roadway generation unit configured to generate a roadway by extracting roadway perimeter data based on driving path links; a shoulder generation unit configured to generate a mesh between a curb of a sidewalk which connects a border of the sidewalk and a border of the roadway, and the roadway; a sidewalk and bike road generation unit configured to generate a sidewalk and a bike road; and a road surface marking generation unit configured to generate a mesh for displaying lanes, crosswalks, and road surfaces on a road.

## Description

### BACKGROUND

### FIELD

The disclosure relates to a method for generating three-dimensional (3D) roads in a virtual environment, and more particularly, to an autonomous driving simulator based on precise road map data, and a method for automatically generating 3D roads by simulating a real road environment as a digital twin.

### DESCRIPTION OF RELATED ART

Simulating the real world in a virtual environment is referred as a digital twin. In order to construct such a digital twin environment, real-world environmental data is required, and to create it, a 3D real world is modeled by precisely acquiring camera images, and point cloud data of light detection and ranging (LiDAR).

In the case of an autonomous driving simulator, it is important to make an environment resemble the real world when it is seen by human eyes, and also, it is more important to make a virtual environment seen by sensors mounted in autonomous vehicles resemble the real environment.

Therefore, when 3D information is represented, points, lines, surfaces are simply used, but, when roads are represented, road surfaces and lanes, crosswalks, and road surface markings drawn on the roads are separated and given different identifiers.

Road data should be generated in such a way that objects can be recognized by autonomous driving sensors as having different characteristics although they are not visually different, and road data can be used as variables for testing autonomous driving technologies, such as simulating different reflectivity or cracking depending on a material applied to lanes.

Most of related-art technologies generate only road surfaces to represent visual elements only or do not generate precise lane-based data, and do not generate data for autonomous driving simulators.

### SUMMARY

The disclosure has been developed in order to solve the above-described problems, and an object of the disclosure is to provide a method for automatically generating 3D roads in a virtual environment based on precise road map data, which is capable of generating 3D roads based on requirements for autonomous driving, rather than typical 3D roads.

According to an embodiment of the disclosure to achieve the above-described object, a system for automatically generating 3D roads in a virtual environment based on precise road map data may include: a map data pre-processing unit configured to perform a pre-processing operation with respect to data of each layer constituting a precise road map in a shapefile format; a roadway generation unit configured to generate a roadway by extracting roadway perimeter data based on driving path links among the layers constituting the precise road map; a shoulder generation unit configured to generate a mesh between a curb of a sidewalk which connects a border of the sidewalk and a border of the roadway, and the roadway; a sidewalk and bike road generation unit configured to generate a sidewalk and a bike road by using data of a subsidiary section among the layers constituting the precise road map; and a road surface marking generation unit configured to generate a mesh for displaying lanes, crosswalks, and road surfaces on a road.

In addition, the map data pre-processing unit may perform a data structure generation operation to generate a data structure with geometrical data and attribute information of the data of each layer constituting the precise road map, and a topologizing operation to find a correlation of the data of each layer and to generate a network.

The map data pre-processing unit may perform a process of connecting a next link, a left link, and a right link in the same driving direction through line segments and attribute information of each object when connecting the driving path links, and interconnecting the layers by using data of each layer or data between layers, and may calculate a boundary of a road by calculating from a leftmost link to a rightmost link with a mutually connected topology, and may generate a roadway mesh through the calculated boundary of the road.

When a group of outermost edges of the left and right links in the same driving direction is set as a single GP, and a gap occurs between the two GPs, the roadway generation unit may calculate a dot product of two vectors which are extracted from the two GPs according to a shape of each GP and a position of the gap, and may fill in the gap.

The sidewalk and bike road generation unit may generate a polygonal mesh by using intersection points between driving path links existing within the subsidiary section and a polygon within the subsidiary section in order to generate the sidewalk and the bike road.

When generating the polygonal mesh by using the intersection points between the driving path links existing within the subsidiary section and the polygon within the subsidiary section, the sidewalk and bike road generation unit may select driving path links existing within the subsidiary section by using data of the subsidiary section, and may interconnect the driving path links, and, when the type of the subsidiary section is a sidewalk, may extract points within the inter-connected driving path links and the polygon within the subsidiary section, may calculate an intersection point between a vector that is ±π/2 rotated to the left and right with reference to the points of the driving path links within the subsidiary section, and a boundary of the subsidiary section, and may generate additional points which are spaced from the boundary by a distance of a curb to be utilized for generating the mesh connecting the border of the sidewalk and the border of the roadway.

According to an embodiment, the system may further include a roadway tree generation unit configured to, when a group of outermost edges of the left and right links in the same driving direction is set as a single GP, generate a roadway tree by generating a k-d tree in the unit of a GP, such that the shoulder generation unit and the sidewalk and bike road generation unit improve speed for searching the nearest GP by using the roadway tree.

The shoulder generation unit may calculate a distance to a roadway GP by using only a road surface marking indicating the border of the sidewalk, and may generate a polygon by calculating points nearest to the roadway GP from border points through the roadway tree in order to generate a polygonal mesh.

The road surface marking generation unit may distinguish and display solid lines, double solid lines, and dashed lines when displaying lanes on the road, and, when displaying lanes, crosswalks, and road surfaces on the road, may project lanes, crosswalks, and road surfaces on a 3D roadway polygon without using map data as it is in order to generate the road more accurately than when map data is used as it is.

According to another embodiment of the disclosure, there is provided a method for automatically generating 3D roads in a virtual environment based on precise road map data, the method including: performing, by a map data pre-processing unit, a pre-processing operation with respect to data of each layer constituting a precise road map in a shapefile format; generating, by a roadway generation unit, a roadway by extracting roadway perimeter data based on driving path links among the layers constituting the precise road map; generating, by a shoulder generation unit, a mesh between a curb of a sidewalk which connects a border of the sidewalk and a border of the roadway, and the roadway; generating, by a sidewalk and bike road generation unit, a sidewalk and a bike road by using data of a subsidiary section among the layers constituting the precise road map; and generating, by a road surface marking generation unit, a mesh for displaying lanes, crosswalks, and road surfaces on a road.

According to still another embodiment of the disclosure, there is provided a system for automatically generating 3D roads in a virtual environment based on precise road map data, the system including: a map data pre-processing unit configured to perform a pre-processing operation with respect to data of each layer constituting a precise road map; a roadway generation unit configured to generate a roadway by extracting roadway perimeter data based on driving path links among the layers constituting the precise road map; a roadway tree generation unit configured to, when a group of outermost edges of left and right links in the same driving direction is set as a single GP, generate a roadway tree by generating a k-d tree in the unit of a GP, such that a shoulder generation unit and a sidewalk and bike road generation unit improve speed for searching the nearest GP by using the roadway tree; a shoulder generation unit configured to generate a mesh between a curb of a sidewalk which connects a border of the sidewalk and a border of the roadway, and the roadway; a sidewalk and bike road generation unit configured to generate a sidewalk and a bike road by using data of a subsidiary section among the layers constituting the precise road map; and a road surface marking generation unit configured to generate a mesh for displaying lanes, crosswalks, and road surfaces on a road.

As described above, according to embodiments of the disclosure, by generating 3D roads based on requirements for autonomous driving rather than typical 3D roads, it is possible to reduce the cost and time required for generating 3D roads and contribute to verification of autonomous driving technologies.

According to embodiments of the disclosure, a road environment may be automatically generated as a digital twin in the unit of centimeter that is similar to the real world in the unit of lane by using the precise road map, so that the gap between the virtual world and the real world may be minimized when the autonomous driving functions are tested.

According to embodiments of the disclosure, roadways, sidewalks, bike roads, lanes may be separated and provided as instances for each layer to be utilized as training data for autonomous driving cognitive artificial intelligence.

Other aspects, advantages, and salient features of the invention will become apparent to those skilled in the art from the following detailed description, which, taken in conjunction with the annexed drawings, discloses exemplary embodiments of the invention.

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:
FIG. 1A is a view illustrating an example of a precise road map;
FIG. 1B is a view illustrating an example of a virtual 3D road;
FIG. 2 is a view provided to explain a configuration of a system for automatically generating 3D roads in a virtual environment based on precise road map data according to an embodiment of the disclosure;
FIG. 3 is a view illustrating an example of a result of extracting outermost boundary points of roadways in a roadway generation unit according to an embodiment of the disclosure;
FIG. 4 is a view illustrating examples of ground patches (GPs) according to an embodiment of the disclosure;
FIG. 5 is a view illustrating an example of a gap generated in a portion where a GP is connected with another GP in the same driving direction;
FIG. 6 is a view illustrating an example of a gap generated in a portion where a GP is connected with another GP in the same driving direction;
FIG. 7 is a view illustrating a linking algorithm applied between GPs according to an embodiment of the disclosure;
FIG. 8 is a view provided to explain an inter-GP linking algorithm according to an embodiment of the disclosure;
FIG. 9 is a view provided to explain an inter-GP linking algorithm according to an embodiment of the disclosure;
FIG. 10 is a view provided to explain an inter-GP linking algorithm according to an embodiment of the disclosure;
FIG. 11 is a view provided to explain an inter-GP linking algorithm according to an embodiment of the disclosure;
FIG. 12 is a view provided to explain examples of groups of connected road surface line markings (connected lanes), GPs, shoulders (gutters);
FIG. 13 is a view illustrating an example of sidewalk and bike road data in a precise road map;
FIG. 14 is a view illustrating an example of driving path link points within a subsidiary section;
FIG. 15 is a view illustrating an example of a result of calculating border points of a subsidiary section;
FIG. 16 is a view illustrating an example of a result of generating a subsidiary section mesh; and
FIG. 17 is a view illustrating an example of a case in which road surface line markings are projected correctly on a road surface, and an example of a case in which road surface line markings are projected incorrectly on a road surface.

### DETAILED DESCRIPTION

Hereinafter, the disclosure will be described in more detail with reference to the accompanying drawings. In order to clearly explain the disclosure, parts not related to the descriptions are omitted from the drawings, and, in the drawings, the width, lengths, thicknesses of components may be exaggerated for convenience.

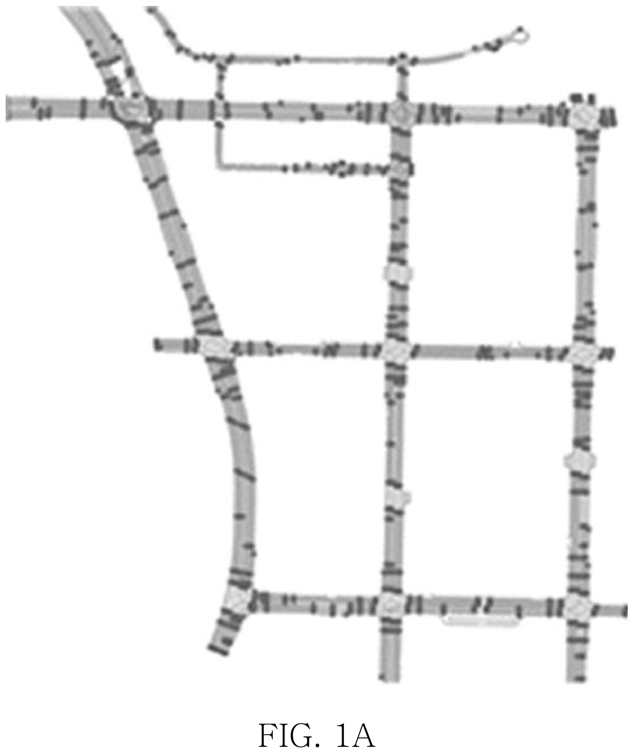

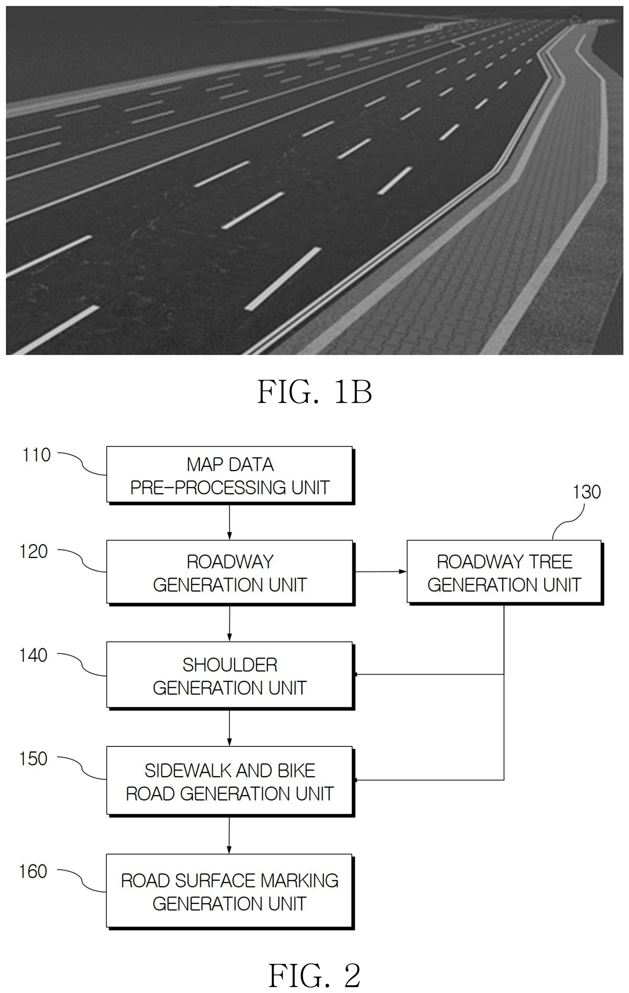

FIG. 1A is a view illustrating a precise road map, and FIG. 1B is a view illustrating 3D roads in a virtual environment.

The precise road map may be generated in the form of shapefile, and may be comprised of various layers (B2_SURFACELINEMARK: road surface line marking, A2_LINK: driving path link, A1_NODE: driving path node, B3_SURFACEMARK: road surface marking, C1_TRAFFICLIGHT: traffic light, C4_SPEEDBUMP: speed bump).

Here, B2_SURFACELINEMARK depends on restriction lines marked on a road surface. Here, this layer may include information on center lanes, reversible lanes, U-turn lanes, bus-only lanes as geometrical attributes.

The aforementioned attributes may refer to geometrically identical straight lines, but one may be a center lane and another may be a reversible lane. Even the same reversible lanes may contain information called IDs to distinguish them, which are called attributes.

A2_LINK refers to a line along which vehicles can drive, and is typically defined as a center line of the lane.

However, A2_LINK may be generated where there is no lane like a crossroad, and this information may enable autonomous vehicles to travel at a crossroad without lanes.

B3_SURFACEMARK refers to a layer that contains road surface marking information, and includes road surface markings. An example of these layers may be the precise road map illustrated in FIG. 1A.

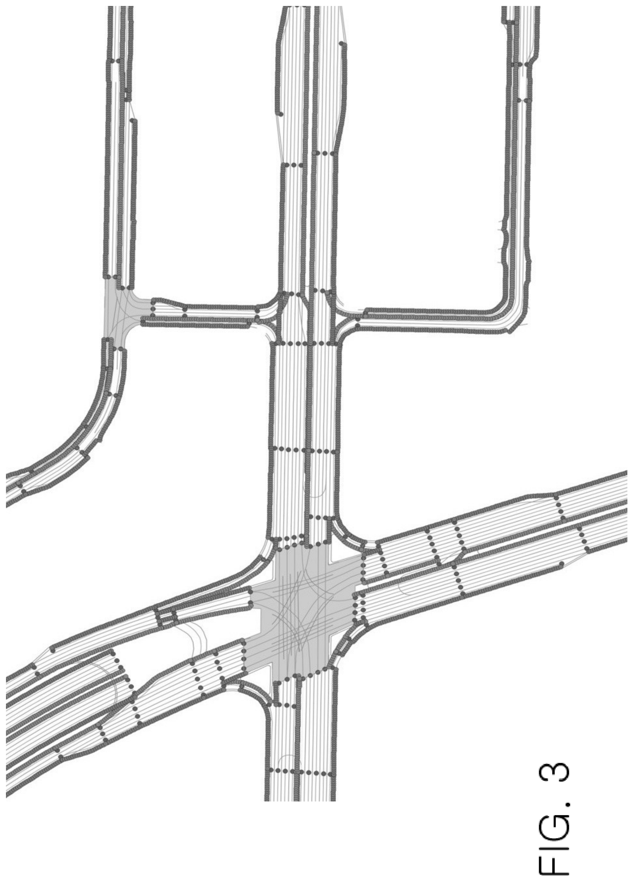

As shown in FIG. 1B, 3D roads in the virtual environment are simulation of roads in the real environment and are expressed in the form of a mesh which is one of the methods of representing 3D objects in computer graphics.

The mesh may be defined as a set of polygons connected to generate exteriors of objects. The polygon may be referred to as a set of line segments connected or a set of points. A simple form of the polygon may be a triangle or a rectangle, and the mesh may be expressed in the form of a polygon including a triangle and a rectangle.

In the virtual environment for simulating autonomous driving, traffic, road users, that is, vehicles, motorcycles, bikes, pedestrians may make traffic flows, and autonomous driving in traffic flows or traffic-engineering element functions may be tested.

In such virtual environments, 3D roads are most fundamental information for arranging road users. 3D roads are essential information for placing objects on roadways or sidewalks and moving along roads.

FIG. 2 is a view provided to explain a configuration of a system for automatically generating 3D roads in a virtual environment based on precise road map data according to an embodiment of the disclosure.

Referring to FIG. 2, the system for automatically generating 3D roads in a virtual environment based on precise road map data (hereinafter, referred to as a "system") according to an embodiment may include a map data pre-processing unit 110, a roadway generation unit 120, a roadway tree generation unit 130, a shoulder generation unit 140, a sidewalk and bike road generation unit 150, and a road surface marking generation unit 160.

The map data pre-processing unit 110 may perform pre-processing with respect to data of each layer constituting a precise road map.

Specifically, the map data pre-processing unit 110 may perform a data structure generation operation to generate a data structure with geometrical data and attribute information of the data of each layer constituting the precise road map, and a topologizing operation to find a correlation of data that each layer has and to generate a network.

That is, the map data pre-processing unit 110 may perform topologizing which is a process of finding a correlation of data that each layer has and generating a network, along with a process of invoking a precise road map and generating a data structure with geometrical data and attribute information of data of each layer.

For example, the map data pre-processing unit 110 may connect next links, left-side links, right-side links in the same driving direction through line segments and attribute information of each object when connecting driving path links, and may connect layers to one another by using data of each layer or data between layers. To obtain the next or previous links in the same driving direction of the driving path links, driving path nodes should be used.

The map data pre-processing unit 110 may calculate road boundaries by calculating a leftmost link and a rightmost link with the interconnected topology, and may generate a roadway mesh through the calculated boundaries.

The roadway generation unit 120 may generate a roadway by extracting roadway perimeter data based on the driving path links among the layers constituting the precise road map.

Since the roadway is formed in both directions, the roadway generation unit 120 may calculate the leftmost side and the rightmost side of the road in each direction, and may generate a mesh through outermost boundary points.

The leftmost side and the rightmost side of the road in the driving direction may be calculated by discovering the left driving path link of the driving path links by using linking information until the left driving path link does not have linking information, and by discovering the rightmost driving path link in the same way.

As an example of the above, FIG. 3 illustrates a result of extracting the rightmost points and the leftmost points.

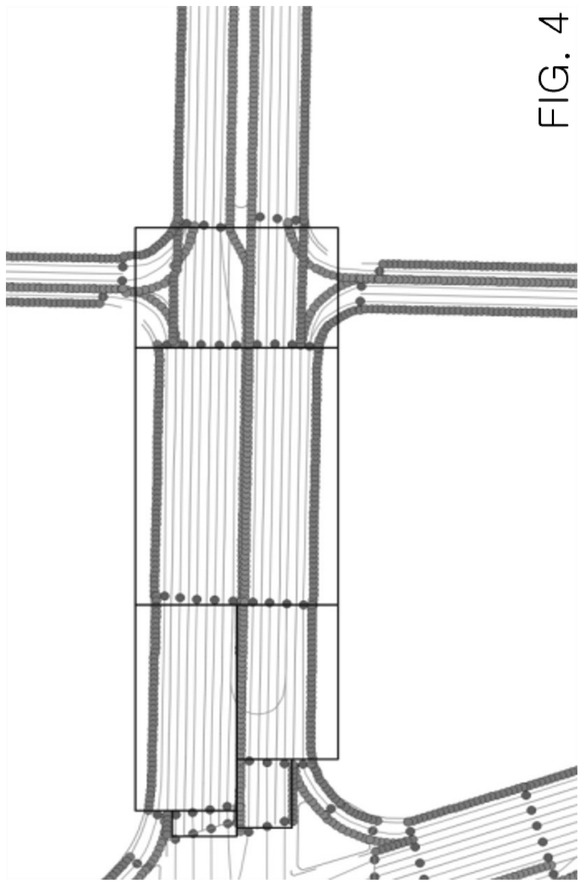

In an embodiment, it may be assumed that gaps between driving path links in the same direction are similar, and a group of outermost edges of left and right links in the same driving direction may be set as one ground patch (GP). FIG. 4 illustrates examples of ground patches (GPs) according to an embodiment of the disclosure. Here, the rectangles of FIG. 4 indicate ground patches (GPs).

The roadway generation unit 120 may set (generate) GPs with reference to a shorter side when making the leftmost points and the rightmost points.

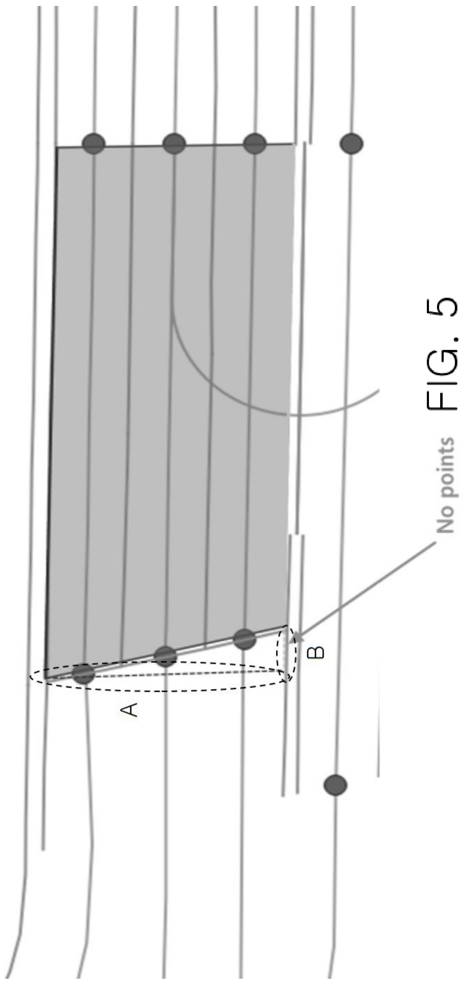

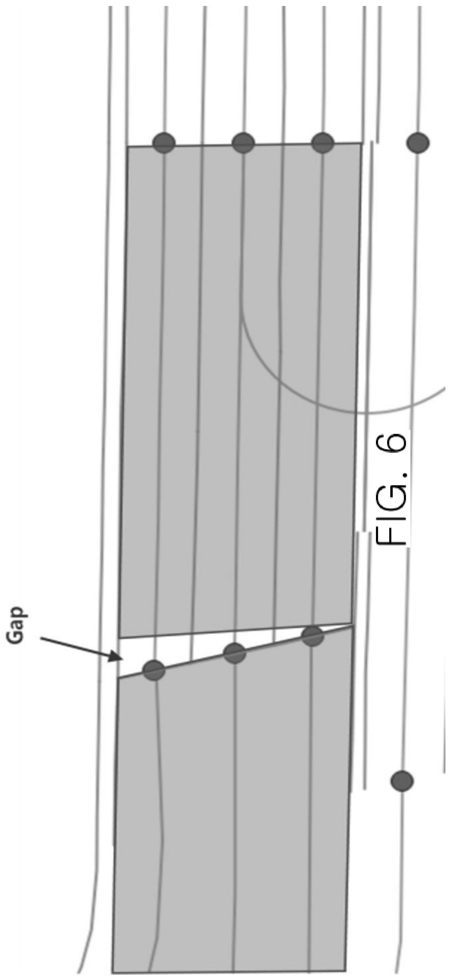

If the longer side is used as a reference, the shorter side does not have data, and hence, data should be arbitrarily generated. To solve this problem, the shorter side is used as a reference. In this case, gaps may be generated between two GPs as shown in FIGS. 5 and 6. In FIG. 5, the A pointes indicate links on the longer side and the B points indicate links on the shorter side.

As shown in FIG. 6, a gap may be generated on a portion where a GP is connected with another GP in the same driving direction due to the shorter side. These gaps are visual in the virtual environment and actually impede movements of virtual objects, so that it is necessary to fill in the gaps.

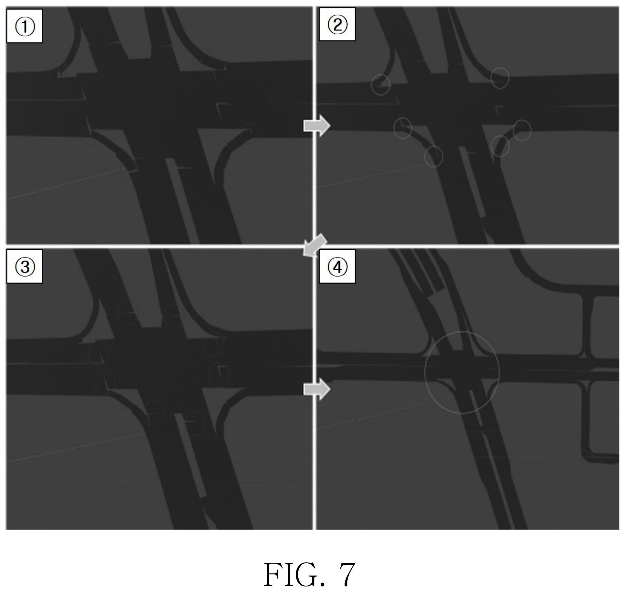

Therefore, as shown in FIG. 7, the next GP in the driving direction may be obtained through the next driving path links of the driving path links within the GP.

This is possible by topologizing to connect left, right, front, rear links of the driving path links in the map data pre-processing unit 110.

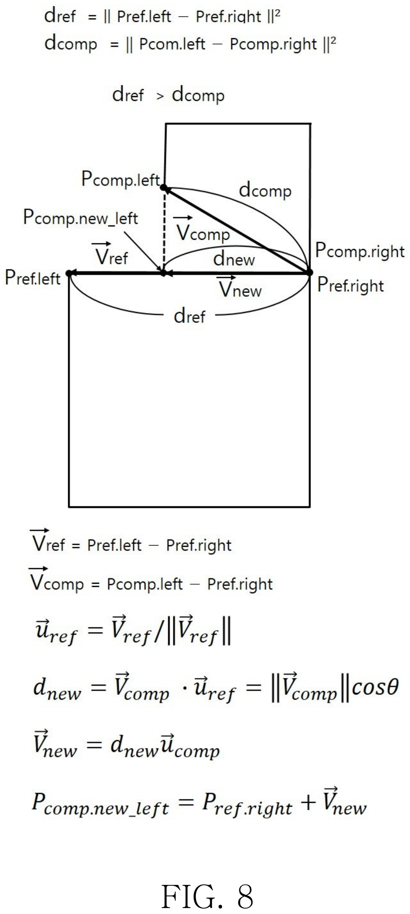

Four cases may be derived according to positions of gaps generated according to shapes of GPs as shown in FIGS. 8, 9, 10, 11, and the roadway generation unit 120 may fill in the gaps by applying an algorithm for linking according to a corresponding case.

For example, when a gap is generated between two GPs (a portion where a short side of a specific GP is connected to another GP in the same driving direction), a dot product between two vectors which are extracted from the two GPs may be calculated according to the shape of each GP and the position of the gap, and the gap may be filled in.

Specifically, as shown in FIG. 8, in a circumstance where a gap is generated in a portion Pref.left where a short side Pcomp.left of a specific GP is connected with another GP in the same driving direction, when the direction of the generated gap is to the left and the length dref of the horizontal link of another GP in the same driving direction is longer than the length dcomp of the horizontal link of the specific GP (the first case among the four cases), the roadway generation unit 120 may calculate a dot product of a first vector Vcomp that is extracted from the portion of the specific GP connected to another GP in the same driving direction, and a second vector Vref that is extracted from the portion of another GP in the same direction connected to the specific GP.

Here, Pcomp.new _left refers to a point that is connected with the portion Pcomp.left where the gap is generated based on the result of calculating the dot product of the two vectors.

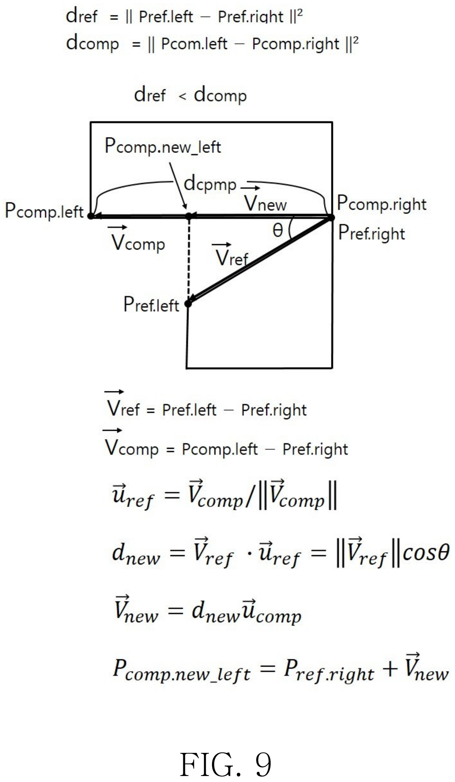

In another example, as shown in FIG. 9, in a circumstance where a gap is generated in a portion Pcomp.left where a short side Pref.left of a specific GP is connected with another GP in the same driving direction, when the direction of the generated gap is to the left and the length dcomp of the horizontal link of another GP in the same driving direction is longer than the length dref of the horizontal link of the specific GP (the second case among the four cases), the roadway generation unit 120 may calculate a dot product of a first vector Vcomp that is extracted from the portion of the specific GP connected to another GP in the same driving direction, and a second vector Vref that is extracted from the portion of another GP in the same direction connected to the specific GP.

Here, Pnew_left refers to a point that is connected with the portion Pref.left where the gap is generated based on the result of calculating the dot product of the two vectors.

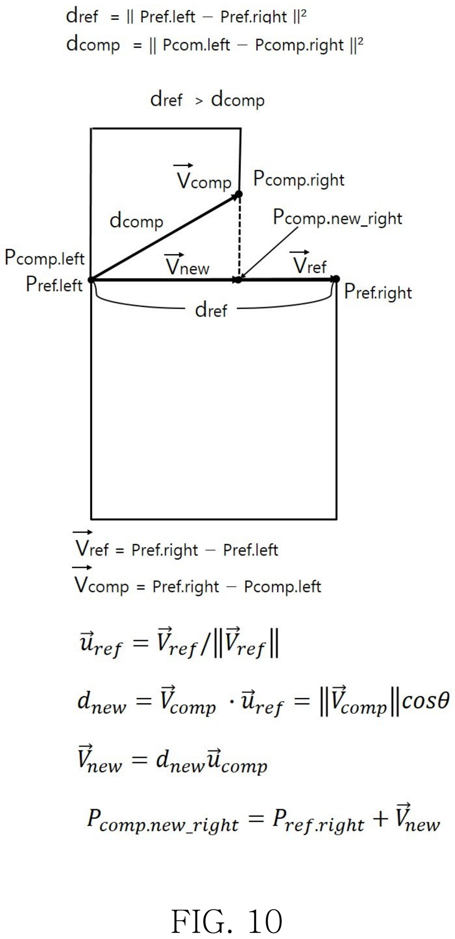

In still another example, as shown in FIG. 10, in a circumstance where a gap is generated in a portion Pref.right where a short side Pcomp.right of a specific GP is connected with another GP in the same driving direction, when the direction of the generated gap is to the right and the length dref of the horizontal link of another GP in the same driving direction is longer than the length dcomp of the horizontal link of the specific GP (the third case among the four cases), the roadway generation unit 120 may calculate a dot product of a first vector Vcomp that is extracted from the portion of the specific GP connected to another GP in the same driving direction, and a second vector Vref that is extracted from the portion of another GP in the same direction connected to the specific GP.

Here, Pcomp.new _right refers to a point that is connected with the portion Pcomp.right where the gap is generated based on the result of calculating the dot product of the two vectors.

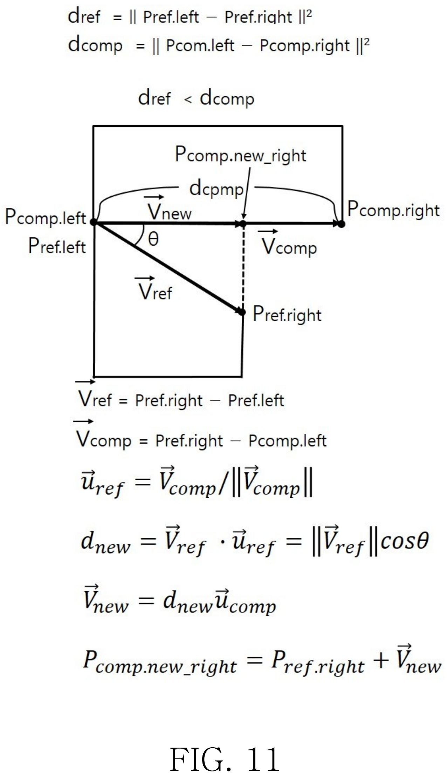

In yet another example, as shown in FIG. 11, in a circumstance where a gap is generated in a portion Pcomp.right where a short side Pref.right of a specific GP is connected with another GP in the same driving direction, when the direction of the generated gap is to the right and the length dcomp of the horizontal link of another GP in the same driving direction is longer than the length dref of the horizontal link of the specific GP (the fourth case among the four cases), the roadway generation unit 120 may calculate a dot product of a first vector Vcomp that is extracted from the portion of the specific GP connected to another GP in the same driving direction, and a second vector Vref that is extracted from the portion of another GP in the same direction connected to the specific GP.

Here, Pcomp.new _right refers to a point that is connected with the portion Pref.right where the gap is generated based on the result of calculating the dot product of the two vectors.

The roadway tree generation unit 130 may generate a roadway tree by generating a k-d tree in the unit of a GP in order to improve the speed for searching the nearest GP.

In addition, the roadway tree generation unit 130 may organize the k-d tree only with geometrical characteristics except for attribute information while topologizing, thereby optimizing the function of calculating the nearest object. That is, the reason for generating the roadway tree is to optimize for faster searching when the shoulder generation unit 140 and the sidewalk and bike road generation unit 150 search the nearest GP.

Here, the roadway tree generation unit 130 may utilize any tree-like searching algorithm other than the k-d tree to make the roadway tree.

The shoulder generation unit 140 may generate a mesh between a curb of a sidewalk and a roadway connecting a border of the sidewalk and a border of the roadway.

A 3D road in the virtual environment is comprised of roadways, shoulders, sidewalks and bike roads, road surface markings. A roadway is a driving space of the road where vehicles travel, and is typically comprised of two or more lanes and refers to a path where vehicles travel.

A shoulder is a space located at both sides of a roadway, and typically has gutters, and may be designed for stopping or parking vehicles or for bike users.

When the shoulder generation unit 140 connects the curb of a sidewalk, that is, the border of sidewalk, with the border of a roadway, the shoulder generation unit 140 may calculate a distance to a roadway GP only with a road surface line marking indicating the border of the sidewalk by using B2_SURFACELINEMARK: road surface line marking indicating the sidewalk.

For example, the shoulder generation unit 140 may calculate a distance to a roadway GP by using only a road surface line marking indicating a border of a sidewalk, and may calculate the nearest point to the roadway GP from border points through the roadway tree to generate a polygonal mesh.

For example, the shoulder generation unit 140 may generate the polygon by selecting only road surface line markings the type of which is the border of the sidewalk from all road surface line markings, selecting one of the selected road surface line markings, examining whether the selected road surface line marking is a connected road surface line marking with reference to the end point of the selected road surface line marking and generating a group of the road surface line markings of the borders of the sidewalks, examining whether there is a connected road surface line marking with reference to the first point in the group of the road surface line markings of the borders of the sidewalks and adding the road surface line marking to the group of the road surface line markings of the borders of the sidewalks, searching a GP nearest to geometrical information points of all the road surface line markings in each group, and calculating a point that is projected by drawing a 3D perpendicular foot to the GP nearest to a point of the road surface line marking.

That is, the shoulder generation unit 140 may acquire the nearest roadway GP through the roadway tree generated by the roadway tree generation unit 130, and may generate the polygon by making one pair of boundary points nearest to the roadway GP.

The process of obtaining the nearest point by drawing the perpendicular foot in the 3D space refers to calculating in the 3D space.

The nearest point may be excluded if a distance between the nearest point and the project point is wider than a preset shoulder distance.

The shoulder generation unit 140 may perform the following operations in sequence of:
1) collecting only road surface line markings the type of which is borders of sidewalks from all road surface line markings;
2) selecting one of the road surface line markings the type of which is borders of sidewalks, searching a road surface line marking with reference to the end point, examining whether the searched road surface line marking is a connected road surface line marking, and generating a group of road surface line markings of borders of sidewalks;
3) searching a road surface line marking with reference to the first point in the group of road surface line markings of borders of sidewalks and examining whether the searched road surface line marking is a connected road surface line marking, and adding the road surface line marking to the group of road surface line markings of borders of sidewalks;
4) searching a GP that is nearest to geometrical information points of all road surface line markings in each group of road surface line markings of borders of sidewalks, and calculating a point that is projected by drawing a 3D perpendicular foot to the GP nearest to the point of the road surface line marking; and
5) excluding the nearest GP when a distance from the point of the road surface line marking to the projected point is wider than a preset shoulder distance (for example, in urban centers, the maximum size of a gutter is 1.0 m by regulation).

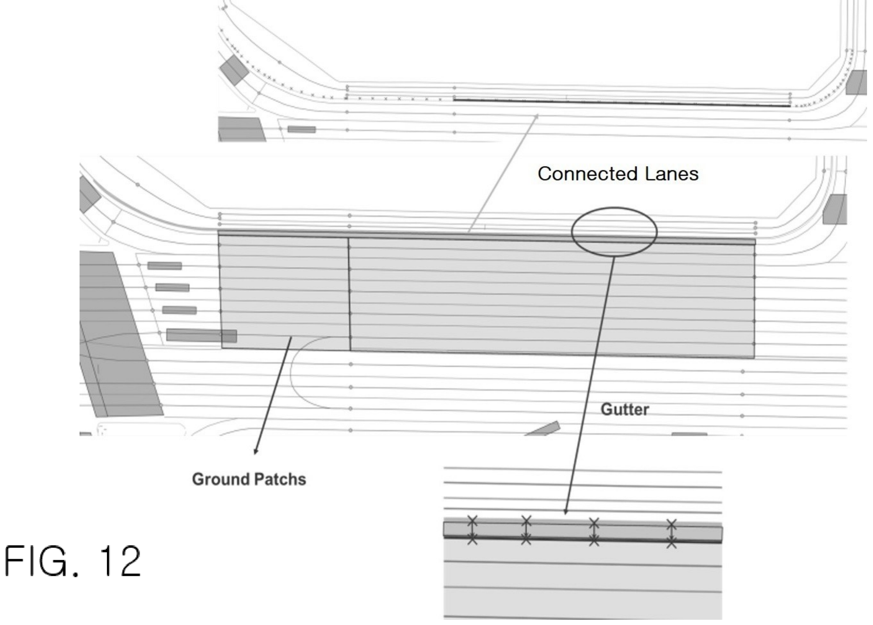

These operations of the shoulder generation unit 140 may be summarized as follow if they are divided into two parts:
1) Grouping connected road surface line markings (steps 1-3)
   - Results are obtained while passing through steps 1-3 in the above algorithm.
   - Road surface line markings within the precise road map may be classified as shown in FIG. 12 according to a predetermined criterion based on a road shape and a relationship with driving path links even when they are of the same type.
   - If the mesh is divided into several meshes in the process of calculating points to the nearest GP and meshing the obtained points, the process of calculating inter-mesh connectivity and connecting the meshes should be performed. The reason for grouping the road surface line markings of boards of sidewalks is for pre-connecting to minimize this process.
   - However, since the road surface line markings have no information on the previous or next road surface line marking unlike driving path links, a process of obtaining a previous/next road surface line marking by selecting a road surface line marking existing within a distance and a direction of a predetermined criterion from the end point of the road line marking may be added.
2) Connecting to a ground patch (steps 4-5)
   - All points that the road surface line markings in the group of connected road surface line markings have, and boundary points of the GP are calculated in pair,
   - To make one pair, a process of filtering out the case where the point projected to the nearest GP is narrower than a preset shoulder distance is required.
   - Much time is required to acquire the nearest GP since the nearest GP is calculated while projecting all boundary points within all GPs.
   - Accordingly, optimization is performed to organize GPs into a k-d tree and to calculate the nearest point that can be projected within the nearest GP.

Meanwhile, the sidewalk and bike road generation unit 150 may generate a sidewalk and a bike road by using data of a subsidiary section among the layers constituting the precise road map.

Herein, a sidewalk is a space dedicated for pedestrians that is separated from a roadway and has a curb, and may be designed to be a predetermined height higher than the roadway and to allow pedestrians to walk safely.

A bike road is a road for bike users that is typically designed like a sidewalk or as a road enabling bike travel between a roadway and a sidewalk.

Specifically, the sidewalk and bike road generation unit 150 may generate a polygonal mesh by using intersection points of driving path lines existing within the subsidiary section and the polygon within the subsidiary section in order to generate a sidewalk and a bike road.

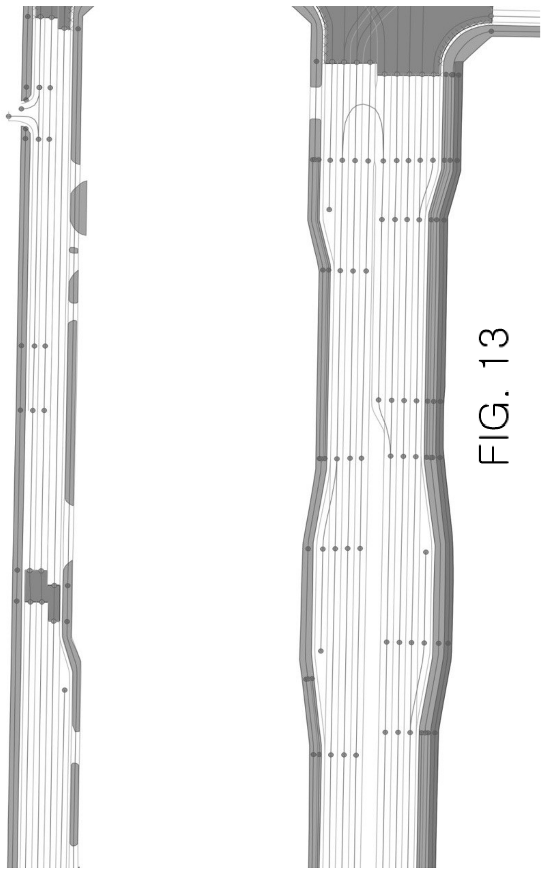

FIG. 13 is a view illustrating sidewalk and bike road data in the precise road map. The gray polygons in FIG. 13 refer to A4_SUBSIDIARYSECTION: subsidiary section data.

That is, the sidewalk and bike road generation unit 150 may acquire boundary points of the subsidiary section polygon with reference to the driving path link passing through the center of the subsidiary section.

The reason for using the driving path links rather than using only the subsidiary section is that if the mesh is generated simply with the polygon, the mesh may be generated with suboptimal points.

The mash should be generated in a triangular or rectangular form among the polygonal forms and points should be minimized, so that resources may be used more efficiently when a simulation is performed.

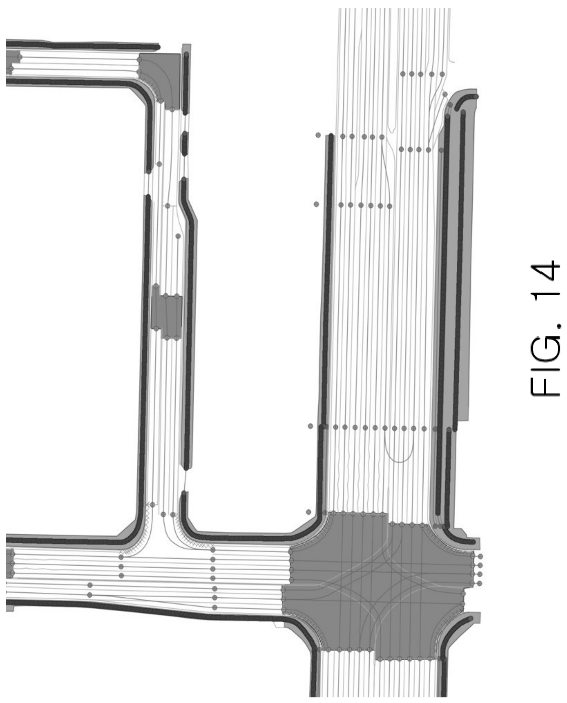

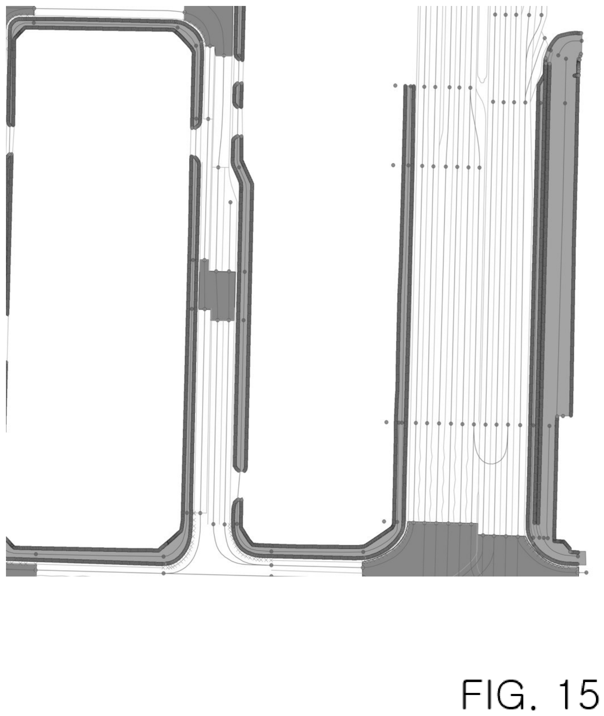

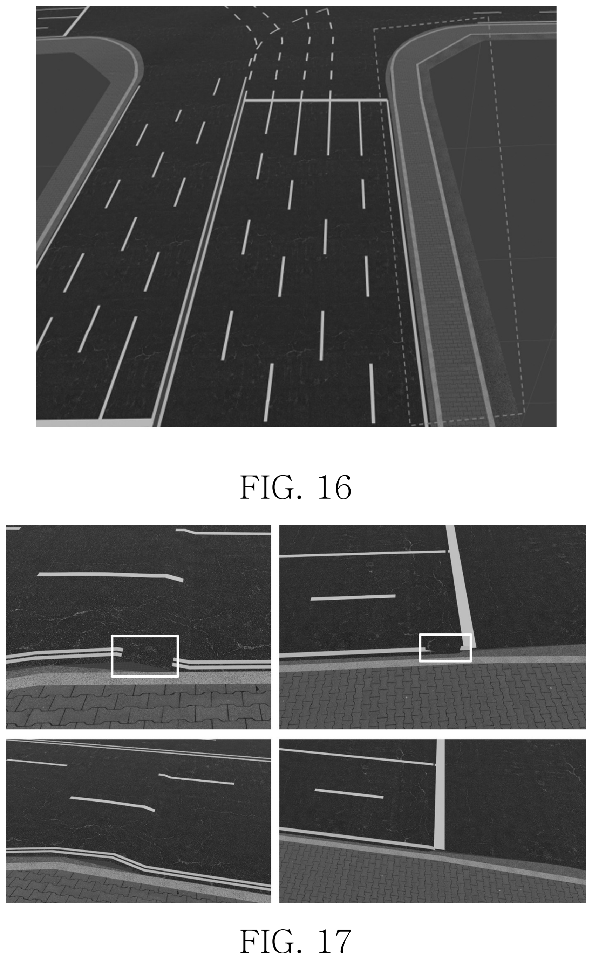

Specifically, the sidewalk and bike road generation unit 150 may perform the following operations:
1) extracting driving path links existing within the subsidiary section,
   - wherein driving path links existing within the subsidiary section are selected and corresponding driving path links are connected,
   - wherein points within the mutually matched driving path links and the polygon within the subsidiary section are extracted since if the type of the subsidiary section is a sidewalk, the driving path links should also be a sidewalk so that the same texture may be covered afterward,
   - wherein FIG. 14 illustrates points within the driving path links that are obtained in the above-described method,
   wherein FIG. 14 is a view illustrating points of the driving path links within the subsidiary section, FIG. 15 is a view illustrating a result of calculating boundary points of the subsidiary section, and FIG. 16 is a view illustrating a result of generating a subsidiary section mesh; and
2) generating a mesh with boundary points of left/right subsidiary sections with reference to the points of the driving path links that are obtained in the above operation 1),
   wherein an intersection point between a vector ±π/2 rotated to the left and right with reference to the points of the driving path links existing in the subsidiary section, which are obtained in the above operation 1), and a boundary of the subsidiary section is calculated,
   wherein additional points are generated by spacing from the boundary by a distance of a curb, and are utilized for generating a mesh for the curb.

In summary, when generating a polygonal mesh by using intersection points of driving path links existing within a subsidiary section and a polygon within the subsidiary section, the sidewalk and bike road generation unit 150 may select driving path links existing within the subsidiary section by using data of the subsidiary section and may interconnect them, and, when the type of the subsidiary section is a sidewalk, may extract points within the interconnected driving path links and the polygon within the subsidiary section, may calculate an intersection point between a vector ±π/2 rotated to the left and right with reference to the points of the driving path links within the subsidiary section, and a boundary of the subsidiary section, and may generate additional points that are spaced from the boundary by a curb distance to use for generating a mesh connecting a border of a sidewalk and a border of a roadway.

The road surface marking generation unit 160 may generate a mesh for displaying lanes, crosswalks, and road surfaces on roadways.

Road surface markings may be various symbols and lines including lanes drawn on roadways to indicate driving directions of drivers, speed limits, stop lines.

Crosswalks and road surface markings may be generated through a mesh that is predefined by the road surface marking generation unit 160, and lanes may be directly generated, and to achieve this, B2_SURFACELINEMARK: road surface line markings may be utilized for the precise road map.

Specifically, when lanes are displayed on a road, the road surface marking generation unit 160 may distinguish between solid lines, double solid lines, and dashed lines.

That is, the road surface marking generation unit 160 may divide markings into single solid lines, double solid lines, dashed lines, U-turn lines, stop lines, and may group the markings according to types, and a mesh may be generated considering that solid lines of each type have different widths and spacings.

In addition, when lanes, crosswalks, and road surfaces are displayed on the road, the road surface marking generation unit 160 may not directly use map data and may allow lanes, crosswalks, and road surfaces to be projected on a 3D roadway polygon in order to generate roads more accurately than when using map data as it is.

Road surface line markings drawn on roadways should be projected accurately on a road surface. If the road surface line markings are not accurately projected, they go underneath a road surface, or if the road surface line markings are too far away from a roadway, they may cause shadows.

Accordingly, the road surface marking generation unit 160 should project road surface markings accurately on a road surface, and should project road surface markings at a distance such that they do not cause shadows and are not buried. FIG. 17 illustrates a case in which road surface line markings are correctly projected on a road surface (bottom view), and a case in which road surface line markings are incorrectly projected on a road surface (top view).

Up to now, the method and system for automatically generating 3D roads in a virtual environment based on precise road map data has been described in detail with reference to preferred embodiments.

According to embodiments of the disclosure, by generating 3D roads based on requirements for autonomous driving rather than typical 3D roads, it is possible to reduce the cost and time required for generating 3D roads and contribute to verification of autonomous driving technologies.

According to embodiments of the disclosure, a road environment may be automatically generated as a digital twin in the unit of centimeter that is similar to the real world in the unit of lane by using the precise road map, so that the gap between the virtual world and the real world may be minimized when the autonomous driving functions are tested.

According to embodiments of the disclosure, roadways, sidewalks, bike roads, lanes may be separated and provided as instances for each layer to be utilized as training data for autonomous driving cognitive artificial intelligence.

The technical concept of the disclosure may be applied to a computer-readable recording medium which records a computer program for performing the functions of the apparatus and the method according to the present embodiments. In addition, the technical idea according to various embodiments of the disclosure may be implemented in the form of a computer readable code recorded on the computer-readable recording medium. The computer-readable recording medium may be any data storage device that can be read by a computer and can store data. For example, the computer-readable recording medium may be a read only memory (ROM), a random access memory (RAM), a CD-ROM, a magnetic tape, a floppy disk, an optical disk, a hard disk drive, or the like. A computer readable code or program that is stored in the computer readable recording medium may be transmitted via a network connected between computers.

In addition, while preferred embodiments of the present disclosure have been illustrated and described, the present disclosure is not limited to the above-described specific embodiments. Various changes can be made by a person skilled in the at without departing from the scope of the present disclosure claimed in claims, and also, changed embodiments should not be understood as being separate from the technical idea or prospect of the present disclosure.

## Claims

1. A system for automatically generating 3D roads in a virtual environment based on precise road map data, the system comprising:
a map data pre-processing unit configured to perform a pre-processing operation with respect to data of each layer constituting a precise road map in a shapefile format;
a roadway generation unit configured to generate a roadway by extracting roadway perimeter data based on driving path links among the layers constituting the precise road map;
a shoulder generation unit configured to generate a mesh between a curb of a sidewalk which connects a border of the sidewalk and a border of the roadway, and the roadway;
a sidewalk and bike road generation unit configured to generate a sidewalk and a bike road by using data of a subsidiary section among the layers constituting the precise road map; and
a road surface marking generation unit configured to generate a mesh for displaying lanes, crosswalks, and road surfaces on a road.

2. The system of claim 1, wherein the map data pre-processing unit is configured to perform a data structure generation operation to generate a data structure with geometrical data and attribute information of the data of each layer constituting the precise road map, and a topologizing operation to find a correlation of the data of each layer and to generate a network.

3. The system of claim 2, wherein the map data pre-processing unit is configured to: perform a process of connecting a next link, a left link, and a right link in the same driving direction through line segments and attribute information of each object when connecting the driving path links, and interconnecting the layers by using data of each layer or data between layers; and to calculate a boundary of a road by calculating from a leftmost link to a rightmost link with a mutually connected topology, and to generate a roadway mesh through the calculated boundary of the road.

4. The system of claim 1, wherein, when a group of outermost edges of the left and right links in the same driving direction is set as a single GP, and a gap occurs between the two GPs, the roadway generation unit is configured to calculate a dot product of two vectors which are extracted from the two GPs according to a shape of each GP and a position of the gap, and to fill in the gap.

5. The system of claim 1, wherein the sidewalk and bike road generation unit is configured to generate a polygonal mesh by using intersection points between driving path links existing within the subsidiary section and a polygon within the subsidiary section in order to generate the sidewalk and the bike road.

6. The system of claim 5, wherein, when generating the polygonal mesh by using the intersection points between the driving path links existing within the subsidiary section and the polygon within the subsidiary section, the sidewalk and bike road generation unit is configured to:
select driving path links existing within the subsidiary section by using data of the subsidiary section, and interconnect the driving path links;
when the type of the subsidiary section is a sidewalk, extract points within the inter-connected driving path links and the polygon within the subsidiary section;
calculate an intersection point between a vector that is ±π/2 rotated to the left and right with reference to the points of the driving path links within the subsidiary section, and a boundary of the subsidiary section; and
generate additional points which are spaced from the boundary by a distance of a curb to be utilized for generating the mesh connecting the border of the sidewalk and the border of the roadway.

7. The system of claim 1, further comprising a roadway tree generation unit configured to, when a group of outermost edges of the left and right links in the same driving direction is set as a single GP, generate a roadway tree by generating a k-d tree in the unit of a GP, such that the shoulder generation unit and the sidewalk and bike road generation unit improve speed for searching the nearest GP by using the roadway tree.

8. The system of claim 7, wherein the shoulder generation unit is configured to:
calculate a distance to a roadway GP by using only a road surface marking indicating the border of the sidewalk; and
generate a polygon by calculating points nearest to the roadway GP from border points through the roadway tree in order to generate a polygonal mesh.

9. The system of claim 1, wherein the road surface marking generation unit is configured to:
distinguish and display solid lines, double solid lines, and dashed lines when displaying lanes on the road; and
when displaying lanes, crosswalks, and road surfaces on the road, project lanes, crosswalks, and road surfaces on a 3D roadway polygon without using map data as it is in order to generate the road more accurately than when map data is used as it is.

10. A method for automatically generating 3D roads in a virtual environment based on precise road map data, the method comprising:
performing, by a map data pre-processing unit, a pre-processing operation with respect to data of each layer constituting a precise road map in a shape file format;
generating, by a roadway generation unit, a roadway by extracting roadway perimeter data based on driving path links among the layers constituting the precise road map;
generating, by a shoulder generation unit, a mesh between a curb of a sidewalk which connects a border of the sidewalk and a border of the roadway, and the roadway;
generating, by a sidewalk and bike road generation unit, a sidewalk and a bike road by using data of a subsidiary section among the layers constituting the precise road map; and
generating, by a road surface marking generation unit, a mesh for displaying lanes, crosswalks, and road surfaces on a road.

11. A system for automatically generating 3D roads in a virtual environment based on precise road map data, the system comprising:
a map data pre-processing unit configured to perform a pre-processing operation with respect to data of each layer constituting a precise road map;
a roadway generation unit configured to generate a roadway by extracting roadway perimeter data based on driving path links among the layers constituting the precise road map;
a roadway tree generation unit configured to, when a group of outermost edges of left and right links in the same driving direction is set as a single GP, generate a roadway tree by generating a k-d tree in the unit of a GP, such that a shoulder generation unit and a sidewalk and bike road generation unit improve speed for searching the nearest GP by using the roadway tree;
a shoulder generation unit configured to generate a mesh between a curb of a sidewalk which connects a border of the sidewalk and a border of the roadway, and the roadway;
a sidewalk and bike road generation unit configured to generate a sidewalk and a bike road by using data of a subsidiary section among the layers constituting the precise road map; and
a road surface marking generation unit configured to generate a mesh for displaying lanes, crosswalks, and road surfaces on a road.
